# EUROPÄISCHE PATENTSCHRIFT

(11) **EP 1 777 146 B1**
(45) Veröffentlichungstag und Bekanntmachung des Hinweises auf die Patenterteilung: **13.01.2010**
(21) Anmeldenummer: 06021587.8
(22) Anmeldetag: 14.10.2006
(51) Int. Cl.: B62D 25/04

(54) **Seitenwandkonstruktion für Personenkraftfahrzeuge**
Sidewall structure for a passenger vehicle
Structure latérale de véhicule automobile

(30) Priorität: 19.10.2005 DE 102005049944
(43) Veröffentlichungstag der Anmeldung: 25.04.2007
(73) Patentinhaber: GM Global Technology Operations, Inc., Detroit, MI 48265-3000 (US)
(72) Erfinder: Mildner, Udo, 65550 Limburg (DE)
(74) Vertreter: Daniel, Ulrich W.P.

(56) Entgegenhaltungen:
- WO-A-2005/037629
- DE-A1- 10 125 985
- FR-A- 2 800 697

## Beschreibung

Die Erfindung liegt auf dem Gebiet des Personenkraftwagen-Karosseriebaus und betrifft eine Seitenwandkonstruktion für Personenkraftfahrzeuge nach dem Oberbegriff des Patentanspruchs 1.

Aus der Deutschen Patentanmeldung DE 195 06 160 A1 geht eine Seitenwandkonstruktion hervor, die Teil einer Rahmenkonstruktion ist. Die Rahmenkonstruktion besteht aus mehreren Teilrahmen, die ihrerseits aus Rahmenelementen bestehen, die über Knotenelemente miteinander verbunden sind. Dabei sind zumindest ein Teil der Rahmenelemente - beispielsweise die A-Säule - und die Knotenelemente durch hydraulisches Innenhochdruck-Umformen (so genanntes "Hydroforming / IHU-Verfahren") querschnittsoptimiert vorgefertigt. Die Rahmenkonstruktion durch Verkleidungsteile, wie zum Beispiel einer äußeren Seitenwand, zu einer Fahrzeugkarosserie komplettiert. Zwischen den A-Säulen der gegenüberliegenden Fahrzeugseiten wird im Bereich zwischen der Fahrzeugstirnwand und dem Dach eine in der DE 195 06 160 A1 nicht näher dargestellte Windschutzscheibe montiert.

Bei anderen Konstruktionen ist aus zwei oder mehr profilbildenden Blechteilen mittels Schweißverbindungen ein Trägerprofil gebildet, das als A-Säule dient. Die A-Säulen sind üblicherweise Fahrgastinnenraum-seitig von einer Blende verdeckt. Um die erforderliche Steifigkeit und Torsionsfestigkeit der Karosserie zu gewährleisten, muss das so gebildete hohle Trägerprofil einen vergleichsweise großen Querschnitt aufweisen. Damit schränkt diese A-Säulenkonstruktion die Sicht des Fahrzeugführers nach vorn erheblich ein.

An heutige Fahrzeugkarosserien werden immer anspruchsvollere Anforderungen gestellt, die sich sowohl nach Sicherheits- und Festigkeitskriterien aber auch aus Designaspekten und dem Kundengeschmack ergeben. Diese Anforderungen sind häufig gegensätzlich und stellen deshalb besondere Herausforderungen an den modernen Karosseriebau. Einen besonders wichtiger Aspekt ist dabei der Schutz und die Gefahrvermeidung für andere Verkehrsteilnehmer, insbesondere Fußgänger. Hier besteht neben einem optimierten Crashverhalten der Fahrzeugkarosserie eine ganz wesentliche Anforderung darin, für den Fahrzeugführer eine möglichst gute Sicht nach außen zu ermöglichen, um andere Verkehrsteilnehmer - insbesondere Fußgänger und Radfahrer - frühzeitig und gut erkennen zu können.

Aus der FR 2800697 A1 geht eine Seitenwandkonstruktion der eingangs genannten Art hervor. Diese offenbart einen Fahrzeugbalken, der sich von der Fahrzeugstirnwand bis zum Autodach erstreckt. Dieser Fahrzeugbalken soll in einem ersten Bereich eine Windschutzscheibe und in einem zweiten Bereich das Autodach tragen, wobei der Balken eine Seitenwandstrebe umfasst, auf der sich eine Trägerwand abzeichnet, die abschnittsweise eine Ausnehmung im ersten Bereich des Balkens aufweist. Das Dach liegt auf mindestens einem Teil der Trägerwand und der Windschutz auf wenigstens einem Bereich der Seitenwandstrebe. Der Balken weist teilweise einen geschlossenen Querschnitt auf. Die der Fahrzeugstirnwand und dem Fahrzeugdach zugewandten Enden können durch Schweißen befestigt werden. Der Balken ist zudem von einer Außenverkleidung verdeckt. Insbesondere im oberen seitlichen Bereich der Windschutzscheibe weist die Außenverkleidung einen ungünstigen und den Sichtwinkel des Fahrzeugführers einschränkenden Übergang auf.

Der vorliegenden Erfindung liegt vor diesem Hintergrund nun die Aufgabe zugrunde, eine Seitenwandkonstruktion anzugeben, mit der eine erhebliche Verbesserung der frontseitigen Sicht (nachfolgend auch als Sichtwinkel bezeichnet) geschaffen ist.

Erfindungsgemäß wird diese Aufgabe durch eine Seitenwandkonstruktion mit den Merkmalen des Patentanspruchs 1 gelöst.

Demgemäß ist vorgesehen, dass das Verstärkungselement vom oberen Bereich einer äußeren Seitenwand verdeckt ist, wobei die Seitenwand mit einem Absatz versehen ist, unter dem das Verstärkungselement zur Fahrzeugstirnwand hin unter Freigabe der Montagefläche hervortritt.

Der Absatz kann bevorzugt eine Anlagefläche für den oberen, im Wesentlichen horizontal verlaufenden Randbereich der Windschutzscheibe bilden.

Ein wesentlicher Vorteil der Erfindung besteht darin, dass so eine vom Design her besonders ansprechende und montagetechnisch vorteilhafte Ausführungsform einer Seitenwandkonstruktion geschaffen ist.

Vorteilhafte Ausgestaltungen und Weiterbildungen der Erfindung sind Gegenstand der Unteransprüche sowie der Beschreibung unter Bezugnahme auf die Zeichnung.

Bei der vorliegenden Erfindung ist die Fahrzeugkarosserie gezielt im Bereich der seitlichen Frontscheibenauflage mit einem sehr festen und starren Zusatzkörper (Verstärkungselement) verstärkt, wobei das Verstärkungselement in Zusatzfunktion mit seiner oberen Außenfläche eine Montage- oder Auflagefläche für den Rand bzw. den Seitenbereich der Windschutzscheibe bildet.

Das rohrförmige Profil des Verstärkungselements wirkt somit als innenliegende Verstärkung der A-Säule bzw. in diesem Seitenwandbereich einer im Wesentlichen herkömmlichen Fahrzeugkarosserie. Das Verstärkungselement kann besonders bevorzugt durch hydraulisches Innenhochdruck-Umformen (so genanntes "Hydroforming / IHU-Verfahren") hergestellt sein. Mit diesem Verfahren lassen sich annähernd alle gewünschten Formen, variable Querschnitte und Ausformungen bilden. Durch seinen vollgeschlossenen Querschnitt zeichnet sich das Verstärkungselement durch eine besonders hohe Festigkeit bzw. Steifigkeit aus, so dass bei gleichen Belastungen ein gegenüber dem eingangs beschriebenen zusammengesetzten Hohlprofilträger insgesamt wesentlich geringerer Durchmesser bzw. Querschnittsfläche des Verstärkungselements ausreichend ist. Das Potential der dadurch möglichen Vergrößerung des zur Verfügung stehenden Sichtbereichs wird dadurch genutzt, dass die Windschutzscheibe an einer insoweit seitlich nach außen verlagerbaren Montagefläche des Verstärkungselements montiert ist. Dadurch ergibt sich vorteilhafterweise ein wesentlich vergrößerter Sichtwinkel für den Fahrzeugführer.

Die unmittelbar mit der Montagefläche des Verstärkungselementes verbundene, beispielsweise verklebte, Windschutzscheibe ist weitestgehend verwindungs- und spannungsfrei fixiert.

Konstruktiv bevorzugt erstreckt sich das Verstärkungselement mit seinem einen Ende bis zur Fahrzeugstirnwand. Alternativ oder zusätzlich kann sich das Verstärkungselement mit seinem anderen Ende bis zum Fahrzeugdach erstrecken. Zur fertigungstechnisch einfachen und zuverlässigen Verbindung des Verstärkungselementes mit der übrigen Fahrzeugkarosserie kann nach einer bevorzugten Ausgestaltung der Erfindung das Verstärkungselement an seinem der Fahrzeugstirnwand und/oder dem Dachbereich zugewandten Ende schweißbare Anbindungsteile aufweisen.

Besonders bevorzugt ist das Verstärkungselement mit radial nach außen weisenden Erhebungen versehen, die als Verbindungszonen dienen. Insbesondere können die Erhebungen als Schweißzonen oder zum Setzen von Schweißpunkten dienen. Die Erhebungen können bevorzugt durch Hydroforming gebildete Ausprägungen sein.

Das Verstärkungselement kann fertigungstechnisch besonders bevorzugt mit mehreren flächigen Bauteilen verbunden, beispielsweise verschweißt sein, indem die Erhebung mindestens eine Ausnehmung in mindestens einem zu verbindenden Bauteil durchdringt, wobei dieses Bauteil sich quasi "sandwichartig" zwischen dem Verstärkungselement und einem weiteren, mit diesem verbundenen, beispielsweise verschweißten, äußeren Bauteil befindet. Dabei ist das dazwischen liegende Bauteil mit einem Ausschnitt, Lochungen oder allgemein Ausnehmungen versehen, durch die sich die Erhebung mindestens teilweise erstreckt.

Die Erfindung wird nachfolgend anhand der in den schematischen Figuren der Zeichnung angegebenen Ausführungsbeispiele näher erläutert. Es zeigen dabei:
- Figur 1: ein Verstärkungselement für eine erfindungsgemäße Seitenwandkonstruktion;
- Figur 2: das Verstärkungselement gemäß Figur 1 mit Anbindungsteilen;
- Figur 3: den Querschnitt entlang der Linie B-B in Figur 2;
- Figur 4: den Querschnitt entlang der Linie C-C in Figur 2;
- Figur 5: eine erfindungsgemäße Seitenwandkonstruktion in Seitenansicht;
- Figur 6: die Einzelheit X aus Figur 5;
- Figur 7: in perspektivischer Ansicht den rechten oberen Bereich der Frontscheibenaufnahme eines Fahrzeuges mit einer erfindungsgemäßen Seitenwandkonstruktion;
- Figur 8: zur Verdeutlichung der Sichtwinkelverbesserung eine Darstellung der Verhältnisse bei einer erfindungsgemäßen Ausgestaltung einer Seitenwandkonstruktion im Vergleich zu einer konventionellen Ausgestaltung;
- Figur 9: einen Ausschnitt aus einer erfindungsgemäßen Seitenwandkonstruktion und
- Figur 10: einen Querschnitt entlang der Linie D-D in Figur 9.

In allen Figuren der Zeichnung sind gleiche und funktionsgleiche Merkmale und Elemente - sofern nichts Anderes angegeben ist - mit denselben Bezugszeichen versehen.

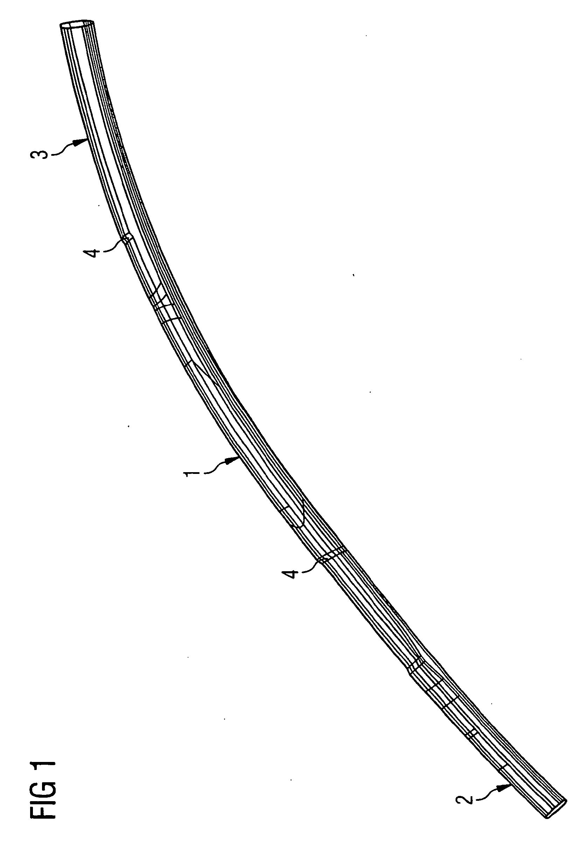

Figur 1 zeigt ein Verstärkungselement 1 zur Verwendung in einer erfindungsgemäßen Seitenwandkonstruktion. Das Verstärkungselement weist ein in Einbaulage frontseitig zur Fahrzeugstirnwand orientiertes Ende 2 und ein zum Dachbereich orientiertes Ende 3 auf. Das Verstärkungselement ist in diesem Ausführungsbeispiel aus einem hydrogeformten, durchgehenden und längsnaht- bzw. längsverbindungsstellenfreien Rohr gebildet, könnte aber genauso aus einem gebogenen Strangpressprofil bestehen. Das Rohr weist örtliche Prägungen oder Erhebungen 4 auf.

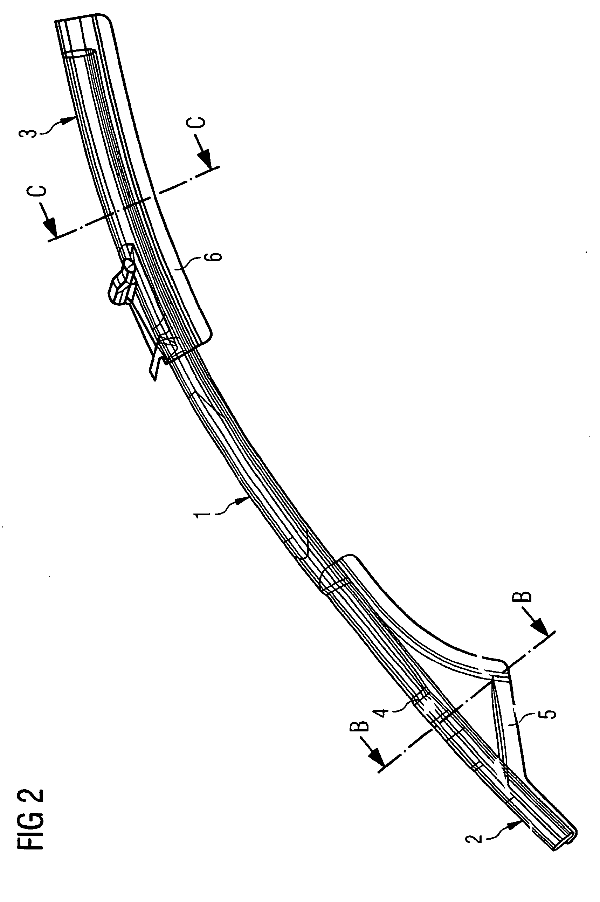

Wie Figur 2 veranschaulicht, ist das Verstärkungselement 1 an seinen Enden 2 bzw. 3 mit Anbindungsteilen 5, 6 versehen. Die auch als Knotenbleche bezeichneten Anbindungsteile weisen entsprechende Konturen auf, die mit den zugeordneten Ausprägungen oder Erhebungen 4 korrespondieren, wobei die Erhebungen bevorzugt zur Herstellung von Schweißverbindungen zwischen Verstärkungselement 1 und Anbindungsteilen 5, 6 dienen.

Das Anbindungsteil 6 dient zur Verbindung mit dem nicht näher dargestellten Dachrahmen bzw. der Dachstruktur des Fahrzeuges und zur Profilbildung bzw. Profilanbindung an die äußere Seitenwand. Das frontseitige Anbindungsteil oder Knotenblech 5 dient zur Verbindung, beispielsweise zur Verschweißung, mit der ebenfalls nicht näher dargestellten Stirnwand des Fahrzeuges.

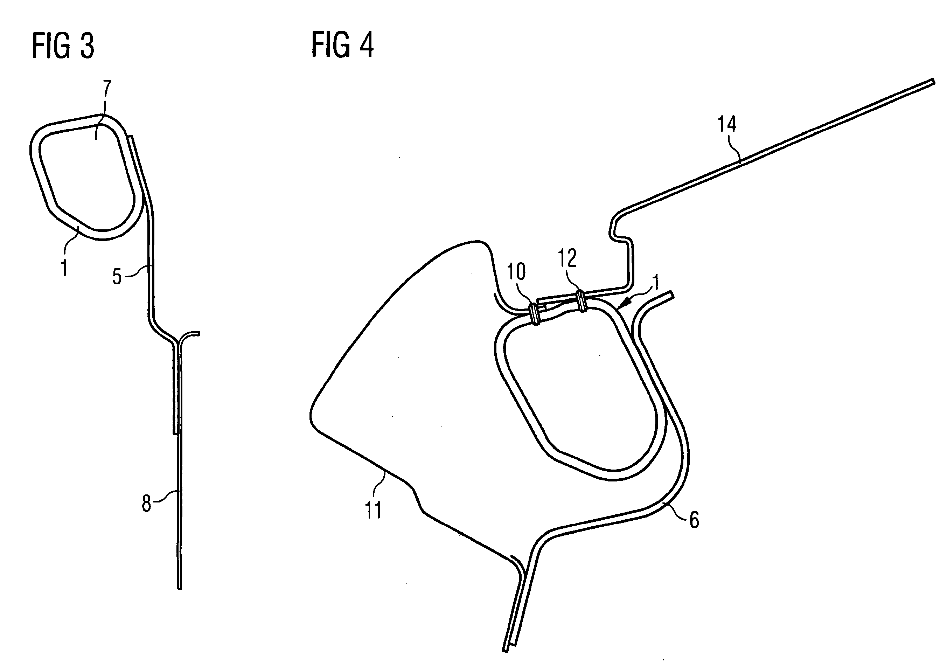

Wie Figur 3 in Schnittdarstellung entlang der Linie B-B in Figur 2 veranschaulicht, ist das Verstärkungselement 1 eine im Querschnitt ringförmige vollgeschlossene Rohrverstärkung und weist dadurch bei verhältnismäßig kleinem Querschnitt 7 eine außerordentlich hohe Festigkeit, insbesondere Torsionsfestigkeit und Biegesteifigkeit, auf. An der einen Seite des Verstärkungselementes 1 ist das angeschweißte Knotenblech 5 erkennbar, das mit einem Seitenteil bzw. der Stirnwand 8 verschweißt ist.

Die in Figur 4 gezeigte Schnittdarstellung entlang der Linie C-C in Figur 2 veranschaulicht, wie das Verstärkungselement 1 im Dachbereich mit dem Knotenblech 6 verbunden ist, das zur Anbindung an die Dachstruktur bzw. den sich seitlich weiter nach hinten erstreckenden Dachrahmen dient. Über Laserschweißnähte und/oder Schweißpunkte 10 (einseitige Punktschweißverbindungen) ist der äußere obere Bereich einer Fahrzeugseitenwand mit dem Verstärkungselement 1 verbunden. Nach Herstellung dieser Verbindung kann anschließend durch weitere Laserschweißnähte und/oder Schweißpunkte 12 das Fahrzeugdach 14 ebenfalls unmittelbar mit dem Verstärkungselement verbunden werden. Ferner ist die Seitenwand 11 mit dem sich wegerstreckenden Teil des Knotenblechs 6 verschweißt.

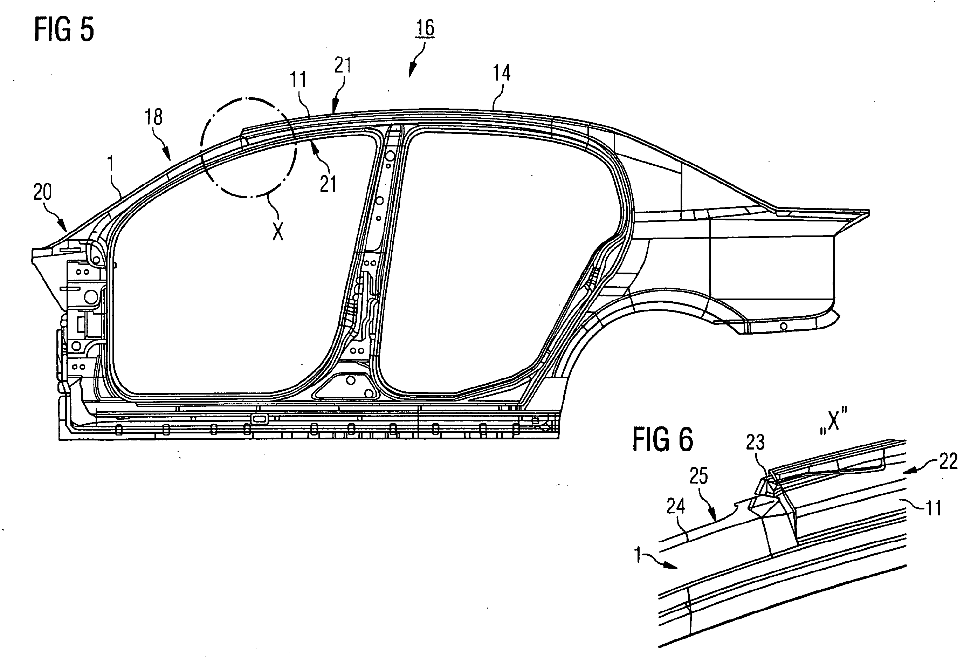

Die so gebildete aus Figur 5 ersichtliche erfindungsgemäße Seitenwandkonstruktion 16 umfasst somit als wesentliche Teile die eigentliche äußere Seitenwand 11 und das Verstärkungselement 1, das die Seitenwand 11 im Bereich des vorderen linken seitlichen Trägerelementes - üblicherweise als A-Säule bezeichnet - 18 verstärkt. Wie erwähnt, erstreckt sich das Verstärkungselement 1 mit seinem Ende 2 in den frontseitigen Bereich 20 der Stirnwand und mit seinem Ende 3 in den rückwärtigen Bereich 21 bis in das Dach 14.

Figur 6 zeigt die Einzelheit X aus Figur 5. Hier ist erkennbar, dass das Verstärkungselement 1 im oberen Bereich 22 der Seitenwand 11 unter einer Stufe oder einem Absatz 23 hervortritt, so dass dort die äußere Oberfläche 24 des Verstärkungselementes 1 zugänglich ist, die in nachfolgend noch beschriebener Weise als Montagefläche 25 für eine einzuklebende Windschutzscheibe dient. Die Windschutzscheibe gelangt dabei - unter Zwischenlage entsprechender Dichtungsmittel - an dem Absatz 23 in Anlage.

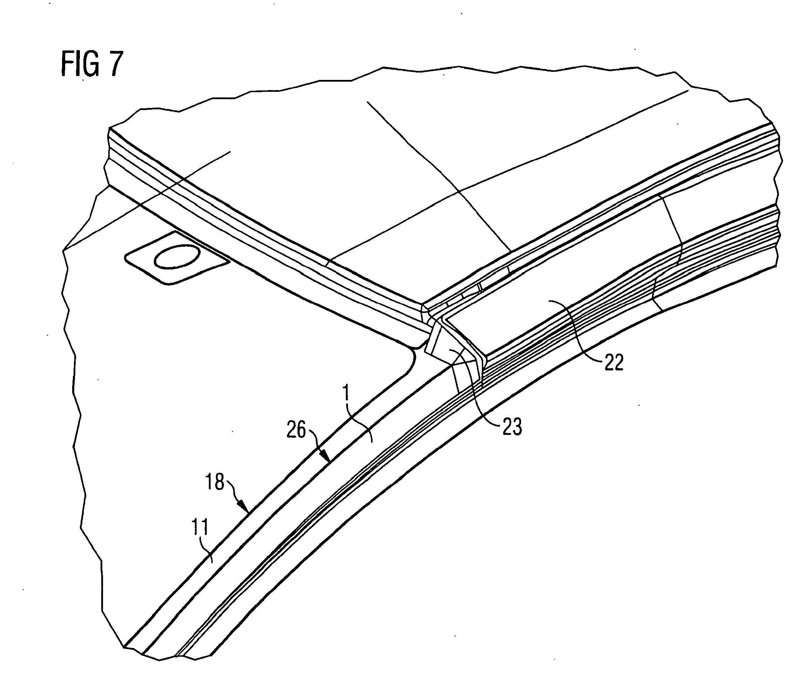

Hierzu gibt Figur 7 in perspektivischer Ansicht einen ergänzenden Überblick, in dem man die von dem Verstärkungselement 1 und einem Flansch der äußeren Seitenwand 11 bzw. Montagefläche 25 gebildete Aufnahme 26 für den nicht näher dargestellten seitlichen Windschutzscheibenbereich erkennt. Damit ist im Bereich der A-Säule 18 unter Beibehaltung ansonsten üblicher Seitenwandkonstruktionen und unter Gewährleistung der geforderten Festigkeit bzw. Steifigkeit der Karosserie eine nur vergleichsweise schmale A-Säulenkontur realisiert.

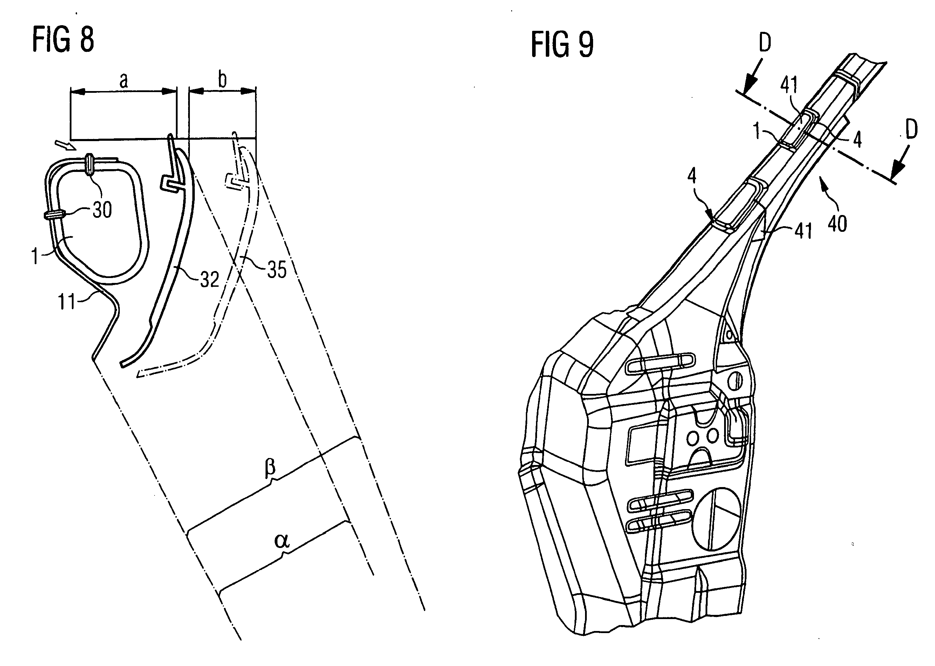

Dies wird im Zusammenhang mit Figur 8 besonders deutlich, in der im Vergleich eine konventionelle Ausgestaltung und eine erfindungsgemäße Seitenwandkonstruktion dargestellt sind. Aufgrund der vergleichsweise dünnen Ausgestaltung des Verstärkungselementes 1 und der unmittelbar sich anschmiegenden und über Laserschweißnähte und/oder Schweißpunkte 30 befestigten äußeren Seitenwand 11 entsteht ein vergleichsweise geringer die Fahrersicht (nachfolgend auch Sichtwinkel genannt) blockierender toter Winkel α.

Aus Designgründen kann der A-Säulenbereich innenseitig mit einer Verkleidung 32 versehen sein, die allerdings zu einer geringfügigen Erhöhung des den Sichtwinkel blockierenden Winkels (d.h. des toten Winkels) beiträgt.

Im Vergleich dazu ergibt sich bei einer konventionellen Ausgestaltung aufgrund des erheblich größeren Querschnitts des aus Blechteilen zusammengefügten Hohlprofils der A-Säule (unter der Annahme einer gleichartigen Verkleidung 35) bzw. bei konventioneller anderweitiger Auflage und Montage der seitlichen Ränder der Windschutzscheibe ein erheblich größerer toter Winkel β. Vorteilhafterweise kann nämlich bei der erfindungsgemäßen Seitenwandkonstruktion insgesamt eine beiderseitig um den Betrag a verbreiterte Frontscheibe 36 eingesetzt werden, wodurch der Sichtbereich für den Fahrzeugführer um den Betrag b - und zwar an beiden Frontscheibenrändern - erweitert ist.

Im Ergebnis ist damit der Sichtbereich bzw. der Sichtwinkel für den Fahrzeugführer insbesondere an den kritischen frontseitigen Bereichen der A-Säule signifikant erweitert. Dies trägt zu einer wesentlichen Erhöhung der Sicherheit insbesondere auch der schwächeren Verkehrsteilnehmer, wie Passanten und Radfahrer, bei.

Figur 9 zeigt schließlich einen Ausschnitt aus der Seitenwandkonstruktion im Bereich eines vorderen Türscharniers 40 mit Verstärkungsblechen 41 zur Scharnierbefestigung und mit dem Verstärkungselement 1. Man erkennt auch hier die Erhebungen bzw. Ausprägungen 4 des Verstärkungselementes 1 an Bereichen, die zur Verbindung mit anderen Konstruktionselementen, nämlich z.B. mit den o.g. Verstärkungsblechen 41 - vorgesehen sind.

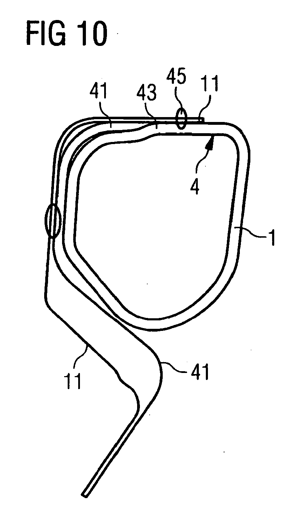

Wie dazu die Schnittdarstellung in Figur 10 entlang der Linie D-D in Figur 9 verdeutlicht, weist das Verstärkungselement 1 eine nach außen gerichtete Erhebung oder Ausprägung 4 auf, die eine Ausnehmung 43 des dazwischen liegenden Verstärkungsblechens 41 durchdringt, so dass das Verstärkungselement 1 dort durch Laserschweißung 45 mit der außenliegenden Seitenwand 11 verschweißt werden kann. Damit ist die Möglichkeit einer Verbreiterung des Sichtwinkels auch gewahrt, wenn hoch belastete Anschlussstellen an der A-Säule nach konventioneller Ausgestaltung eine Profilquerschnitts- und/oder Wanddickenerhöhungen erfordern würden.

Obgleich die vorliegende Erfindung vorstehend anhand eines bevorzugten Ausführungsbeispiels beschrieben wurde, ist sie nicht darauf beschränkt, sondern auf vielfältige Art und Weise modifizierbar.

So sei die Erfindung nicht auf den in den vorstehenden Figuren dargestellten, speziellen Aufbau der Seitenwand beschränkt. Vielmehr kann eben diese Seitenwand je nach speziellem Fahrzeugtyp auf beliebige Art und Weise modifiziert werden, ohne dass vom grundlegenden Prinzip der Erfindung abgewichen wird.

### Bezugszeichenliste

- a: Betrag
- b: Betrag

- α: toter Winkel
- β: toter Winkel

- 1: Verstärkungselement
- 2: Ende
- 3: Ende
- 4: Erhebung
- 5: Anbindungsteil
- 6: Anbindungsteil
- 7: Querschnitt
- 8: Stirnwand
- 10: Schweißpunkte
- 11: Seitenwand
- 12: Schweißpunkte
- 14: Fahrzeugdach
- 16: Seitenwandkonstruktion
- 18: A-Säule
- 20: Bereich
- 21: Bereich
- 22: Bereich
- 23: Absatz
- 24: Oberfläche
- 25: Montagefläche
- 26: Aufnahme
- 30: Schweißpunkte
- 32: Verkleidung
- 36: Frontscheibe
- 40: Türscharnier
- 41: Verstärkungsbleche
- 43: Ausnehmung
- 45: Laserschweißung

## Patentansprüche

1. Seitenwandkonstruktion für Personenkraftfahrzeuge mit einer A-Säule (18), die zumindest im Bereich einer Aufnahme (26) für den seitlichen Windschutzscheibenbereich ein rohrförmiges, im Querschnitt geschlossenes Verstärkungselement (1) aufweist, wobei das Verstärkungselement (1) eine Montagefläche (25) für den seitlichen Bereich einer Windschutzscheibe (36) aufweist, wobei das Verstärkungselement (1) vom oberen Bereich (22) einer äußeren Seitenwand (11) verdeckt ist, **dadurch gekennzeichnet, dass** die Seitenwand (11) mit einem Absatz (23) versehen ist, unter dem das Verstärkungselement (1) zur Fahrzeugstirnwand (20) hin unter Freigabe der Montagefläche (25) hervortritt.

2. Seitenwandkonstruktion nach Anspruch 1, **dadurch gekennzeichnet, dass** sich das Verstärkungselement (1) bis zur Fahrzeugstirnwand (20) und/oder bis zum Fahrzeugdach (14) erstreckt.

3. Seitenwandkonstruktion nach Anspruch 2, **dadurch gekennzeichnet, dass** das Verstärkungselement (1) an seinem der Fahrzeugstirnwand (20) und/oder dem Fahrzeugdach (14) zugewandten Ende (2, 3) schweißbare Anbindungsteile (5, 6) aufweist.

4. Seitenwandkonstruktion nach Anspruch 1, 2 oder 3, **dadurch gekennzeichnet, dass** der Absatz (23) eine Anlagefläche für den oberen horizontalen Rand der Windschutzscheibe (36) bildet.

5. Seitenwandkonstruktion nach einem der vorangehenden Ansprüche, **dadurch gekennzeichnet, dass** das Verstärkungselement (1) radial nach außen weisende Erhebungen (4) aufweist, die als Verbindungszonen dienen.

6. Seitenwandkonstruktion nach Anspruch 5, **dadurch gekennzeichnet, dass** die Erhebungen (4) Ausprägungen sind.

7. Seitenwandkonstruktion nach Anspruch 5 oder 6, **dadurch gekennzeichnet, dass** mehrere flächige Bauteile (11, 41) mit dem Verstärkungselement (1) verbunden sind, indem die Erhebung (4) mindestens eine Ausnehmung (43) in mindestens einem zwischen dem Verstärkungselement (1) und einem äußeren Bauteil (11) befindlichen Bauteil (41) durchdringt.

## Claims

1. A side wall construction for a passenger car, comprising an A-column (18) which at least in the region of a receptacle (26) for the lateral windshield region comprises a tubular reinforcing element (1) which is closed in the cross section, with the reinforcing element (1) having a mounting surface (25) for the lateral region of a windshield (36), with the reinforcing element (1) being covered by the upper region (22) of an outer side wall (11), **characterized in that** the side wall (11) is provided with an offset (23), under which the reinforcing element (1) protrudes towards the face wall (20) of the vehicle by exposing the mounting surface (25).

2. A side wall construction according to claim 1, **characterized in that** the reinforcing element (1) extends up to the face wall (20) of the vehicle and/or up to the roof (14) of the vehicle.

3. A side wall construction according to claim 2, **characterized in that** the reinforcing element (1) comprises weldable linkage parts (5, 6) at its end (2, 3) facing the face wall (20) of the vehicle and/or the roof (14) of the vehicle.

4. A side wall construction according to claim 1, 2 or 3, **characterized in that** the offset (23) forms a contact surface for the upper horizontal edge of the windshield (36).

5. A side wall construction according to one of the preceding claims, **characterized in that** the reinforcing element (1) comprises elevations (4) which protrude radially to the outside and are used as connection zones.

6. A side wall construction according to claim 5, **characterized in that** the elevations (4) are embossed portions.

7. A side wall construction according to claim 5 or 6, **characterized in that** several planar components (11, 41) are connected with the reinforcing element (1), **in that** the elevation (4) penetrates at least one recess (43) in at least one component (41) disposed between the reinforcing element (1) and an outer component (11).

## Revendications

1. Structure de paroi latérale pour des véhicules de transport de personnes avec un montant A (18) qui présente au moins au niveau d'un logement (26) pour la partie latérale du pare-brise un élément de renfort (1) tubulaire de section fermée, lequel élément de renfort (1) présente une surface de montage (25) pour la partie latérale d'un pare-brise (36), l'élément de renfort (1) étant recouvert par la partie supérieure (22) d'une paroi latérale extérieure (11), **caractérisée en ce que** la paroi latérale (11) est munie d'un épaulement (23) sous lequel l'élément de renfort (1) dépasse en direction de la paroi frontale du véhicule (20) en dégageant la surface de montage (25).

2. Structure de paroi latérale selon la revendication 1, **caractérisée en ce que** l'élément de renfort (1) s'étend jusqu'à la paroi frontale du véhicule (20) et/ou jusqu'au toit du véhicule (14).

3. Structure de paroi latérale selon la revendication 2, **caractérisée en ce que** l'élément de renfort (1) présente à son extrémité (2, 3) tournée vers la paroi frontale du véhicule (20) et/ou vers le toit du véhicule (14) des parties de liaison (5, 6) pouvant être soudées.

4. Structure de paroi latérale selon la revendication 1, 2 ou 3, **caractérisée en ce que** l'épaulement (23) forme une surface d'appui pour le bord horizontal supérieur du pare-brise (36).

5. Structure de paroi latérale selon l'une des revendications précédentes, **caractérisée en ce que** l'élément de renfort (1) présente des saillies (4) dirigées vers l'extérieur dans le sens radial, qui servent de zones de liaison.

6. Structure de paroi latérale selon la revendication 5, **caractérisée en ce que** les saillies (4) sont des formes estampées.

7. Structure de paroi latérale selon la revendication 5 ou 6, **caractérisée en ce que** plusieurs composants plans (11, 41) sont assemblés avec l'élément de renfort (1) par le fait que la saillie (4) traverse au moins un évidemment (43) dans au moins une pièce (41) située entre l'élément de renfort (1) et une pièce extérieure (11).
